# FASCICULE DE BREVET EUROPEEN

(11) **EP 1 142 095 B1**
(45) Date de publication et mention de la délivrance du brevet: **19.07.2006**
(21) Numéro de dépôt: 99956095.6
(22) Date de dépôt: 19.11.1999
(51) Int. Cl.: H02M 7/217

(54) **DISPOSITIF DE TRANSFERT DE PUISSANCE PAR TRANSFORMATEUR D'ENERGIE ELECTRIQUE**
LEISTUNGSÜBERTRAGUNGSVORRICHTUNG MIT ELEKTRISCHER ENERGIEUMWANDLUNG
POWER TRANSFER UNIT BY ELECTRICAL ENERGY TRANSFORMER

(30) Priorité: 20.11.1998 FR 9814640
(43) Date de publication de la demande: 10.10.2001
(73) Titulaire: THALES AVIONICS S.A., 78141 Vélizy Villacoublay Cédex (FR)
(72) Inventeur: Taurand, Christophe, Thomson-CSF, 94117 Arcueil Cedex (FR)
(74) Mandataire: Guérin, Michel
(86) Numéro de dépôt international: PCT/FR1999/002851
(87) Numéro de publication internationale: WO 2000/031865

(56) Documents cités:
- WO-A-98/33268
- DE-A- 19 607 243
- DE-U- 29 504 861
- US-A- 5 793 625
- PATENT ABSTRACTS OF JAPAN vol. 97, no. 1, 31 janvier 1997 (1997-01-31) & JP 08 237998 A (ISUZU CERAMICS KENKYUSHO), 13 septembre 1996 (1996-09-13)
- PATENT ABSTRACTS OF JAPAN vol. 7, no. 62 (E-164), 15 mars 1983 (1983-03-15) & JP 57 208864 A (ORIGIN DENKI)
- PATENT ABSTRACTS OF JAPAN vol. 98, no. 11, 30 septembre 1998 (1998-09-30) & JP 10 155273 A (MISUBISHI ELECTRIC CORP.)

## Description

La présente invention concerne un dispositif de transfert de puissance par transformateur d'énergie électrique, et notamment par coupleur magnétique, et plus particulièrement un tel dispositif comprenant, d'un côté primaire un enroulement primaire en série avec une alimentation alternative, et d'un côté secondaire un enroulement secondaire, un pont redresseur et une charge.

Ces dispositifs présentent, d'une manière générale, deux types d'inconvénients.

En premier lieu, les coupleurs magnétiques ont de mauvais rendements du fait de la séparation physique de leurs enroulements primaire et secondaire. Ce mauvais rendement est dû plus particulièrement à une inductance de fuite considérable qui rend inutilisables les structures connues, par exemple de type flyback ou forward.

Par ailleurs, les dispositifs de type connu présentent également l'inconvénient que leur régulation ne permet généralement pas leur mise en oeuvre par simple rapprochement des enroulements primaire et secondaire.

Le document WO 98/33268 décrit un dispositif selon le préambule de la revendication 1.

La présente invention vise à améliorer un tel dispositif.

A cet effet, l'invention a pour objet un dispositif tel que défini par la revendication 1.

Des caractéristiques avantageuses sont definies par les revendications 2 à 4.

On verra qu'un tel agencement revient à court-circuiter l'alimentation du primaire sur l'inductance de fuite. On profite ainsi de la valeur élevée de cette inductance pour l'utiliser comme inductance de stockage. Dans l'invention, cette valeur élevée de l'inductance de fuite ne constitue pas un inconvénient.

Avantageusement, lesdits moyens sont prévus pour commuter lesdits transistors MOS de manière que ladite durée s'écoule tandis que les deux diodes sont bloquées.

Il n'y a donc aucun transfert d'énergie vers la charge pendant la phase de stockage dans l'inductance de fuite.

Par ailleurs, on peut alors réguler le dispositif en déterminant la durée de la phase de stockage en fonction du courant de sortie souhaités.

La régulation s'effectue ainsi uniquement au secondaire. La mise en service du dispositif peut ainsi être réalisée par simple rapprochement physique des enroulements primaire et secondaire.

On décrira maintenant, à titre d'exemple non limitatif, un mode de réalisation particulier de l'invention, en référence aux dessins annexés dans lesquels :
- la figure 1 est un schéma électrique d'un dispositif de transfert d'énergie selon l'invention;
- la figure 2 en est un schéma équivalent, valable pendant une alternance du cycle;
- la figure 3a à 3f sont également des schémas équivalents du dispositif pendant les six phases successives d'un cycle; et
- la figure 4 est un diagramme des variations au cours d'un cycle de certaines grandeurs électriques.

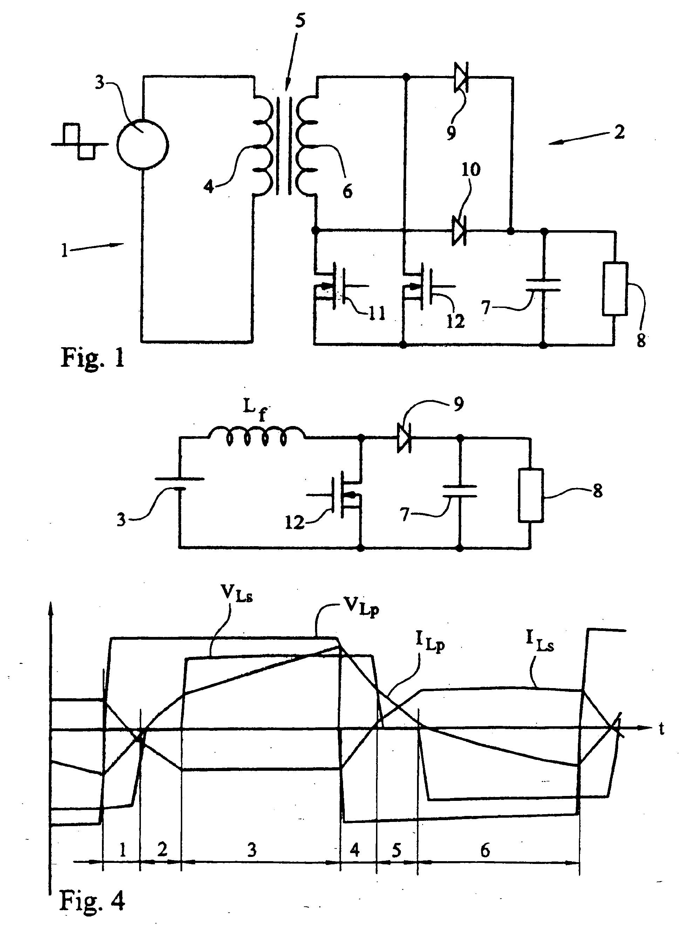

On voit à la figure 1 un circuit électrique composé d'un circuit primaire 1 et d'un circuit secondaire 2.

Le circuit primaire 1 est simplement constitué d'une source de tension 3 en série avec l'enroulement primaire 4 d'un coupleur magnétique 5. La source 3 est une source alternative, ici une source de signaux rectangulaires de rapport cyclique égal à 50 %.

L'enroulement secondaire 6 du coupleur magnétique 5 est connecté à l'entrée d'un pont redresseur dont la sortie est appliquée à un condensateur 7 et à une charge 8.

Deux des branches du pont redresseur sont occupées de façon connue chacune par une diode 9 et 10 respectivement. Les diodes 9 et 10 sont disposées en série avec l'enroulement 6, tête bêche, chacune conductrice dans le sens allant de son point de connexion à l'enroulement 6 à leur point commun.

Les deux autres branches du pont redresseur sont occupées par deux transistors MOS 11 et 12 respectivement. Les transistors MOS sont commandés de toute manière convenable, de manière à obtenir la séquence de phases qui sera décrite ci-après.

La sortie du pont redresseur est prise entre le point commun aux deux diodes et le point commun aux deux transistors MOS.

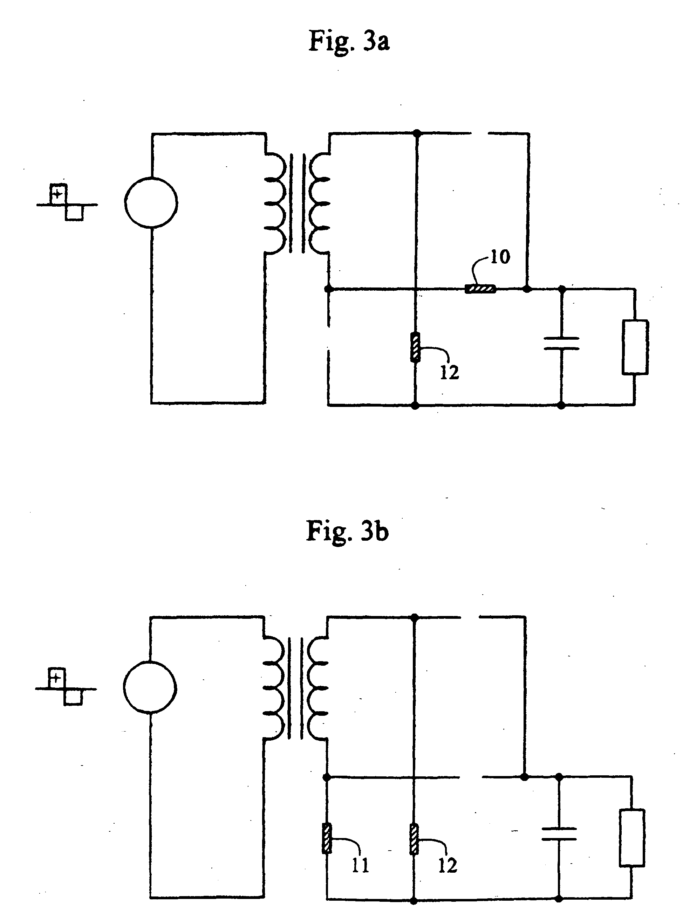

La figure 2 est un schéma équivalent, vu du secondaire, du circuit de la figure 1 pour la première alternance (positive) de la source 3.

On voit sur cette figure la source 3, l'inductance de fuite L_{f}, le transistor MOS 12 susceptible de court-circuiter cette résistance de fuite sur la source, la diode 9, le condensateur 7 et la charge 8.

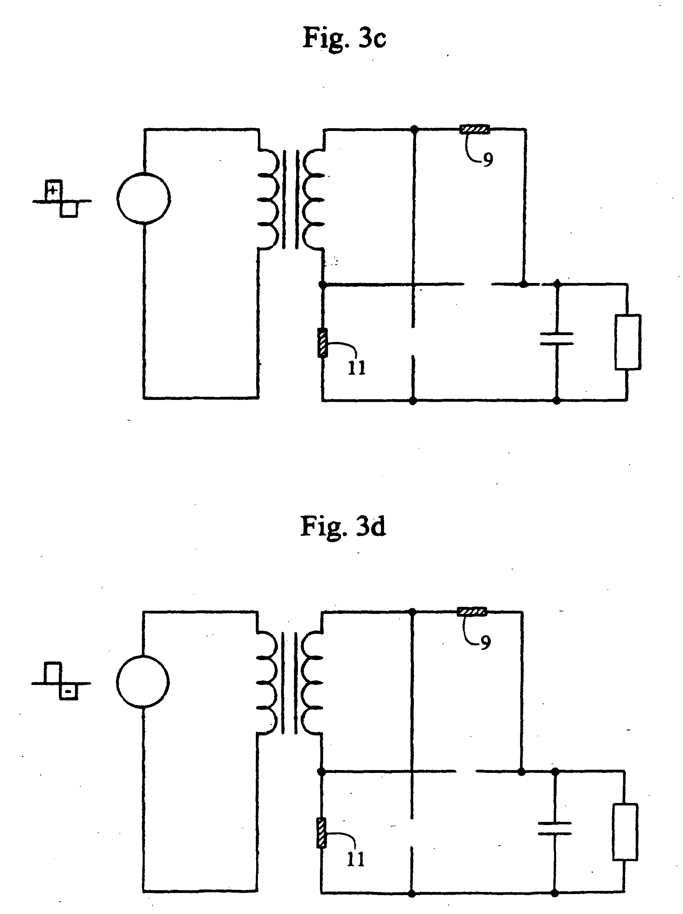

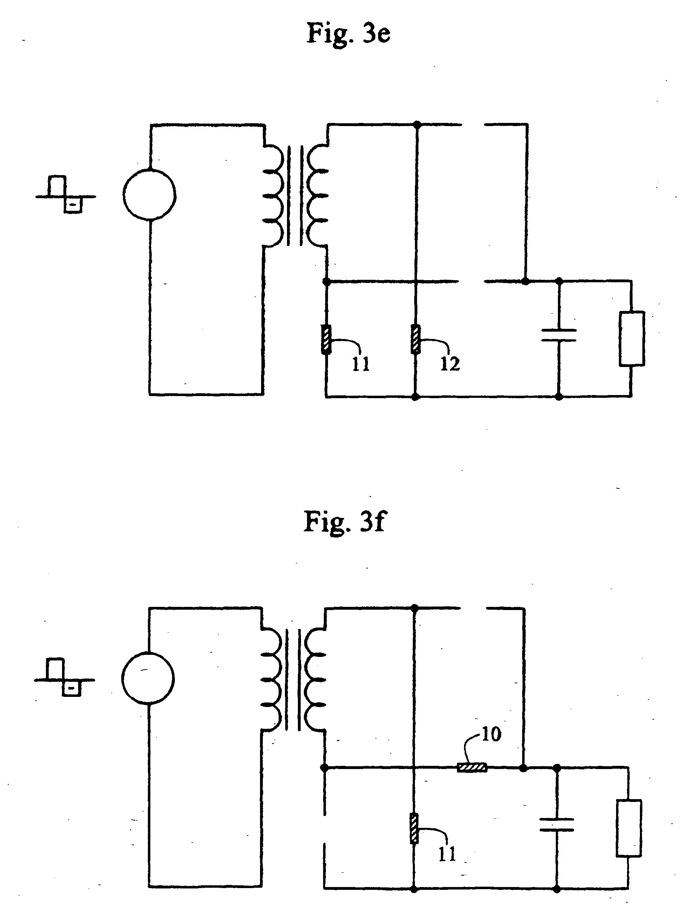

On décrira maintenant le fonctionnement de ce circuit, en référence aux figures 3 et 4.

Au cours de la phase 1 représentée à la figure 3a, le transistor 12 et la diode 10 conduisent. Le transistor 11 et la diode 9 sont à l'état bloqué. Cette phase voit une croissance rapide des courants primaires et secondaires.

La figure 4 illustre les variations de la tension V_{Ls} aux bornes de l'enroulement secondaire, de la tension V_{Lp} aux bornes de l'enroulement primaire de l'intensité I_{Ls} dans l'enroulement secondaire et de l'intensité I_{Lp} dans l'enroulement primaire (égal à I_{Ls} plus le courant dans l'inductance magnétisante).

Le passage à la phase 2 s'effectue lors de l'annulation du courant secondaire V_{Ls} et donc du blocage de la diode 10. La tension drain/source est détectée à zéro et le transistor MOS 11 s'amorce.

La phase 2 est celle du stockage de l'énergie dans l'inductance de fuite. Aucun transfert d'énergie ne s'effectue vers la sortie.

Les deux diodes sont bloqués alors que les transistors MOS 11 et 12 sont tous deux à l'état passant.

On observe à la figure 4 que la tension V_{Ls} aux bornes de l'enroulement secondaire est évidemment nulle.

La durée de cette phase est asservie au courant de sortie désiré. Le passage à la phase 3 suivante s'effectue à la fin de cette durée d'asservissement.

Le transistor MOS 12 est alors bloqué et la diode 9 passe à l'état passant.

Cette phase 3 (figure 3c) est celle du transfert direct de l'énergie du primaire au secondaire. La tension secondaire V_{Ls} est pratiquement stable.

Dans cette phase 3, la diode 9 et le transistor MOS 11 sont à l'état passant.

Le passage à la phase suivante s'effectue à la fin de la première alternance de la tension primaire.

Les transistors MOS 11 et 12 sont commandés par un circuit contrôleur en vue d'obtenir le fonctionnement précédemment décrit. Ce circuit contrôleur reçoit d'une part les informations des tensions entre le drain et la source des transistors MOS 11 et 12, et d'autre part une information d'erreur résultant de la différence de tension entre une tension aux bornes de la charge et une tension de référence.

Lorsque le courant s'annule dans une diode, suite au changement de polarité de la source primaire, une tension inverse apparaît sur cette diode. Cette tension augmente jusqu'au moment où la tension drain/source du MOS connecté à cette diode s'annule. Le circuit contrôleur décide alors de fermer ce MOS par détection du zéro de tension sur le drain. L'autre MOS n'est commandé à l'extinction (l'ouverture) qu'après un temps T. Ce temps T est donné par l'amplificateur d'erreur de façon traditionnelle.

Les phases 4, 5 et 6 se déduisent directement des phases 3, 2 et 1 respectivement. Le schéma de fonctionnement de ces phases est représenté aux figures 3d à 3f.

On a pu constater que l'invention permet d'obtenir d'excellents rendements en dépit de conditions de fonctionnement difficiles. L'homme de métier sera apte, malgré le faible couplage, à régler à cet effet les paramètres nécessaires tels que le nombre de spires du transformateur ou la fréquence de découpage.

Du fait des caractéristiques du coupleur, l'alimentation 3 de la figure 1 est naturellement protégée dans le cas d'absence du circuit secondaire 6 ou d'un court-circuit.

Ce principe d'alimentation fonctionne également dans le cas d'un transformateur traditionnel, et non pas seulement dans un coupleur à circuits primaire et secondaire séparés.

## Revendications

1. Dispositif de transfert de puissance par transformateur d'énergie électrique, et notamment par coupleur magnétique (5), comprenant d'un côté primaire (1) un enroulement primaire (4) en série avec une source alternative (3) et d'un côté secondaire (2) un enroulement secondaire (6), un pont redresseur et une charge (8), le pont redresseur comprenant deux diodes (9, 10) disposées en série avec l'enroulement secondaire (6) et deux transistors MOS (11, 12) également en série avec l'enroulement secondaire (6), la charge (8) étant connectée d'une part au point commun aux deux diodes (9, 10) et d'autre part, au point commun aux deux transistors MOS (11, 12), le fonctionnement du dispositif de transfert étant tel que, pendant une phase 1, un des transistors (12) connecté à une des bornes de l'enroulement secondaire (6) et une des diodes (10) connectée à l'autre borne dudit enroulement secondaire conduisant, l'autre transistor (11) et l'autre diode (9) sont à l'état bloqué, pendant une phase 2 suivante, les deux diodes (9, 10) sont bloquées alors que les deux transistors (11, 12) sont à l'état passant, dans une phase 3, l'autre transistor (11) et l'autre diode (9) sont à l'état passant,
**caractérisé en ce qu'**il comporte des moyens pour commuter lesdits transistors (11, 12) MOS de manière que, pendant la phase 2, les deux transistors soient simultanément à l'état passant pendant une durée prédéterminée, ces moyens comportant un circuit contrôleur recevant les informations des tensions entre le drain et la source des transistors MOS (11 et 12), le circuit contrôleur décidant, lorsque la tension drain/source du MOS connecté à la diode dont le courant s'annule suite au changement de polarité de la source primaire, de fermer ce transistor MOS par détection du zéro de tension sur le drain, l'autre MOS n'étant commandé à l'extinction (l'ouverture) qu'après un temps T.

2. Dispositif de transfert selon la revendication 1, **caractérisé en ce que** le circuit contrôleur reçoit, en outre, une information d'erreur résultant de la différence de tension entre la tension aux bornes de la charge (8) et une tension de référence, le temps T étant donné par un amplificateur d'erreur de façon traditionnelle.

3. Dispositif selon l'une des revendications 1 ou 2 dans lequel lesdits moyens sont agencés pour commuter lesdits transistors MOS (11, 12) de manière que ladite durée prédéterminée s'écoule tandis que les deux diodes (9, 10) sont bloquées.

4. Dispositif selon l'une quelconque des revendications 1 à 3, dans lequel ladite durée T est déterminée en fonction du courant de sortie souhaité.

## Claims

1. Device for transferring power by electrical energy transformer, and in particular by magnetic coupler (5), comprising on a primary side (1) a primary winding (4) in series with an alternating source (3) and on a secondary side (2) a secondary winding (6), a rectifier bridge and a load (8), the rectifier bridge comprising two diodes (9, 10) arranged in series with the secondary winding (6) and two MOS transistors (11, 12) also in series with the secondary winding (6), the load (8) being connected on the one hand to the point common to the two diodes (9, 10) and on the other hand to the point common to the two MOS transistors (11, 12), the operation of the transfer device being such that, during a phase 1, one of the transistors (12) connected to one of the terminals of the secondary winding (6) and one of the diodes (10) connected to the other terminal of the said secondary winding are turned on, the other transistor (11) and the other diode (9) are in the off state, during a following phase 2, the two diodes (9, 10) are turned off whereas the two transistors (11, 12) are in the on state, and in a phase 3, the other transistor (11) and the other diode (9) are in the on state,
**characterized in that** it comprises means for switching the said MOS transistors (11, 12) in such a way that, during the phase 2, the two transistors are simultaneously in the on state for a predetermined duration, these means comprising a controller circuit receiving information on the voltages between the drain and the source of the MOS transistors (11 and 12), the controller circuit deciding, when the drain/source voltage of the MOS connected to the diode whose current is cancelled following the polarity change of the primary source, to close this MOS transistor by detecting the voltage zero on the drain, the other MOS only receiving an off command (the open command) after a time T.

2. Transfer device according to Claim 1, **characterized in that** the controller circuit additionally receives error information resulting from the difference between the voltage across the terminals of the load (8) and a reference voltage, the time T being given by an error amplifier in a conventional manner.

3. Device according to either of Claims 1 and 2, in which the said means are devised so as to switch the said MOS transistors (11, 12) in such a way that the said predetermined duration occurs while the two diodes (9, 10) are off.

4. Device according to any one of Claims 1 to 3, in which the said duration T is determined as a function of the desired output current.

## Patentansprüche

1. Vorrichtung zur Leistungsübertragung durch einen Transformator elektrischer Energie, und insbesondere über einen magnetischen Koppler (5), auf einer Primärseite (1) mit einer Primärwicklung (4) in Reihe mit einer Wechselstromquelle (3) und auf einer Sekundärseite (2) mit einer Sekundärwicklung (6), einer Gleichrichterbrücke und einer Last (8), wobei die Gleichrichterbrücke zwei Dioden (9, 10), die in Reihe mit der Sekundärwicklung (6) angeordnet ist, und zwei MOS-Transistoren (11, 12) aufweist, die ebenfalls mit der Sekundärwicklung (6) in Reihe geschaltet sind, wobei die Last (8) einerseits mit dem den beiden Dioden (9, 10) gemeinsamen Punkt und andererseits mit dem den beiden MOS-Transistoren (11, 12) gemeinsamen Punkt verbunden ist, wobei der Betrieb der Übertragungsvorrichtung so ist, dass während einer Phase 1 einer der Transistoren (12), der mit einer der Klemmen der Sekundärwicklung (6) verbunden ist, und eine der Dioden (10), die mit der anderen Klemme der leitenden Sekundärwicklung verbunden ist, leiten, während der andere Transistor (11) und die andere Diode (9) gesperrt sind, während einer folgenden Phase 2 die beiden Dioden (9, 10) gesperrt sind, während die beiden Transistoren (11, 12) leitend sind, in einer Phase 3 der andere Transistor (11) und die andere Diode (9) leitend sind,
**dadurch gekennzeichnet, dass** sie Mittel aufweist, um die MOS-Transistoren (11, 12) so umzuschalten, dass während der Phase 2 die beiden Transistoren gleichzeitig während einer vorbestimmten Periode leitend sind, wobei diese Mittel eine Überwachungsschaltung aufweisen, die die Informationen der Spannungen zwischen dem Drain und der Source der MOS-Transistoren (11 und 12) empfängt, wobei die Überwachungsschaltung entscheidet, wenn die Spannung zwischen Drain und Source des mit der Diode verbundenen MOS, dessen Strom nach dem Polaritätswechsel der Primärquelle zu Null wird, diesen MOS-Transistor durch Erfassung der Nullspannung am Drain zu schließen, während der andere MOS erst nach einer Zeit T gelöscht (geöffnet) wird.

2. Übertragungsvorrichtung nach Anspruch 1, **dadurch gekennzeichnet, dass** die Überwachungsschaltung außerdem eine Fehlerinformation empfängt, die aus der Spannungsdifferenz zwischen der Spannung an den Klemmen der Last (8) und einer Bezugsspannung resultiert, wobei die Zeit T in üblicher Weise durch einen Fehlerverstärker angegeben wird.

3. Vorrichtung nach einem der Ansprüche 1 oder 2, bei der die Mittel ausgelegt sind, um die MOS-Transistoren (11, 12) so umzuschalten, dass die vorbestimmte Zeitdauer abläuft, während die beiden Dioden (9, 10) gesperrt sind.

4. Vorrichtung nach einem der Ansprüche 1 bis 3, bei der die Dauer T in Abhängigkeit vom gewünschten Ausgangsstrom bestimmt wird.
